# EUROPEAN PATENT SPECIFICATION

(11) **EP 2 179 206 B1**
(45) Date of publication and mention of the grant of the patent: **12.11.2014**
(21) Application number: 08787713.0
(22) Date of filing: 21.07.2008
(51) Int. Cl.: F16L 1/16

(54) **METHOD OF WEIGHTING PLASTIC PIPES**
VERFAHREN ZUM BESCHWEREN VON KUNSTSTOFFROHREN
PROCÉDÉ POUR ALOURDIR DES TUYAUX EN MATIÈRE PLASTIQUE

(30) Priority: 20.07.2007 FI 20075556
(43) Date of publication of application: 28.04.2010
(73) Proprietor: Oy KWH Pipe AB, 65101 Vaasa (FI)
(72) Inventor: HOLM, Alf, FI-65101 Vaasa (FI); VESTMAN, Christian, FI-65101 Vaasa (FI)
(74) Representative: Seppo Laine Oy
(86) International application number: PCT/FI2008/050440
(87) International publication number: WO 2009/013393

(56) References cited:
- WO-A-02/088587

## Description

The present invention concerns a method according to the preamble of claim 1 for weighting plastic pipes having a hollow wall.

WO 02/088587 A1 discloses a method of weighting a plastic pipe with a hollow, air-filled wall, wherein the hollow is filled with a flowing medium which displaces the air, said flowing medium used comprising a mass which can be pumped and which has a density of 1100 - 2500 kg/m³, wherein the weighting mass is pumped into the hollow wall of the pipe under pressure while simultaneously evacuating air from the wall.

According to a method of the aforementioned kind, the hollow wall of the plastic pipe is filled with a flowing medium which displaces air contained therein and which therefore increases the weight of the pipe.

For submerging or sinking of pipelines at sea or in lakes, the conventional procedure is typically to seal both ends of a longish, weighted pipe and to tow the pipe to the location where it is to be submerged. The pipe is controllably filled with water by opening valves at the ends of the pipeline and by allowing water to flow into the pipe. When buoyancy is no more sufficient to keep the pipe floating on the surface of the sea, the pipe will sink to the bottom. Occasionally, the pipe is further covered with covering masses to secure the pipe against wave forces and sea streams, if any, and external loadings, such as anchors.

Thermoplastic pipes which have a density of less than 1000 kg/m³ (e.g. polyethylene and polypropylene pipes) have to be weighted more than, for example, reinforced thermoplastic pipes (glass fibre pipes) during submerging of marine pipelines. Typical weights are formed by cast concrete weights which are bolted to the pipes at even spaces to achieve a suitable total weight of the pipe to allow for controlled sinking.

In addition to conventional pipes with massive (solid) walls, also lightweight pipes having pipe walls formed by hollow profiles are used for marine installations. These pipes naturally have a greater buoyancy than compact-wall pipes and this extra buoyancy has to be compensated for with additional weights. The buoyancy of the pipe can somewhat be reduced by filling the hollow profile with water but this is not sufficient for immobilizing the pipe on the bottom of the sea; for this purpose, the density of water is too small. Furthermore, air pockets are easily formed in the profiles when water is allowed freely to flow inside the hollow profile.

Weights (i.e. the submerging weights) cause extra costs and for example the concrete weights conventionally used cause point loadings on the pipes. In particular when combined with said lightweight pipes having hollow pipe walls, the point loadings can be critical, since the wall thickness of the profile is much smaller than for pipes of the same dimensions having a solid pipe wall.

Clamping of the weights to the pipe has to be very reliable so as to avoid a shifting of the weights in axial direction during sinking of the pipe because the pipe takes up an S-shape during submerging of the pipe, particularly, in deep water from the surface to the bottom.

It is an aim of the present invention to eliminate at least a part of the problems which are related to the known art and to provide a reliable and economically viable way to weight plastic (i.e. thermoplastic) pipes, in particular lightweight pipes having wall formed by a hollow profile, to allow for submerging of the pipes during marine pipelining and for efficient immobilization of the pipes at terrestrial installations.

The invention is based on the idea that the hollow walls of a pipe of the afore-said kind are filled with a flowing material (in the following also called fluid) which displaces the gas, usually air, which is present in the wall. The material has a density substantially greater than that of water. Preferably, the density of the weighting mass is so large that the final weighting percentage for the pipe is between about 1 and 25 %, in particular about 5 to 15 %. Weighting percentage means the ratio between the extra weights and the buoyancy of an air-filled pipe. An exemplifying embodiment of a suitable flowing weighting material comprises a concrete mix which can be pumped and which has an extended hardening time.

A lightweight pipe comprises a pipe wall formed by one or several continuous, hollow thermoplastic profiles of a suitable thermoplastic material, e.g. polyolefin, which are spirally wound to form the jacket of a cylinder which defines the central, axial cavity of the pipe. The wall-forming plastic profiles are welded together to form a tight pipe wall.

A pipeline has usually a large number of individual pipes of the present kind which are joined together e.g. by welding or through flange joints to form a continuous pipeline.

More specifically, the method according to the present invention is characterized by what is stated in the characterizing part of claim 1.

Considerable advantages are obtained with the present invention. The preferred weighting mass, i.e. concrete mix, is generally readily available at pipe installation sites, it is inexpensive and, when injected into the pipe wall, it provides reliable weighting of the pipe which does not give rise to point loadings. The need for anchoring weights is reduced or totally eliminated. The binder of the mass prevents segregation of the aggregate which could otherwise lead to an uneven weight distribution inside the pipe wall.

Preferably a weighting material is used which has a long hardening time and which exhibits a final strength which is small compared to the strength of the material of the plastic pipe. The long hardening time ensure fluidity of the filling material until the pipe is submerged and lies on the bottom of the sea or lake. The final low strength ensures that during any movements that the pipeline can be subjected to the pipe will exhibit the viscoelastatic behavior typical of thermoplastic pipes. The filling material used thereby causes no such stiffening of the wall that could give cause to a break of the pipe during any loadings thereof.

The invention will be examined more closely with the aid of the following detailed description.

As will appear from the above, the invention concerns a method of weighting plastic pipes having a hollow, air-filled wall, according to which method, the hollow wall is filled with a flowing weighting/injection mass which displaces air from the pipe wall. The pipe thereby becomes heavier and easier to submerge during marine installations.

The hollow pipes which are weighted according to the present invention comprise preferably a pipe with a double wall jacket (i.e. a double-walled pipe). The double walls give the pipes good ring stiffness at the same time as the weight becomes lower than for corresponding pipes with solid walls. Such lightweight pipes are comprised of, for example, a wall formed by a spirally wound plastic profile having a cylindrical or rectangular cross-section, wherein adjacent profile windings are welded together to form a hollow wall.

In addition to profiles having a cylindrical or rectangular cross-section, also profiles having other geometries and open cross-sections can be used. As an example of such pipes, the Weholite pipe manufactured and supplied by Oy KWH Pipe Ab, Vaasa, Finland, can be mentioned. The pipe has dimensions up to 3.5 m and is suitable for construction of pipelines for transporting and conducting liquids or air in on the ground, in water and in air.

The method according to the invention for filling hollow walls of plastic pipes is carried out by
- providing both ends of the pipe with an aperture which opens on the surface of the pipe and which is in contact with the air space of the wall, and
- filling the aperture with a weighting/injection mass, which penetrates into the cavity and fills it at the same time as the mass is pumped in.

The material is pumped into the profile via a nozzle which is construed in such a way that a minimum of flowing resistance is generated. To facilitate filling of the cavity of the profile, reduced pressure can be created at the other end of the pipe, i.e. application of a partial vacuum promotes filling and the pressure difference inside the profile becomes larger. The injection (pumping) pressure and the vacuum level used are selected in such a way that the hollow profile is not deformed. Too great a pumping pressure will cause swelling of the profile and a too great vacuum will flatten the profile. The deformations must not be so large that the continuous welding joints which keeps the pipe wall together become overloaded.

Depending on the viscosity of the weighting mass, the injection pressure varies in the range of about 1.2 to 3 bar (abs.), usually a pressure of about 1.5 to 2 bar is sufficient. Similarly, a reduced pressure of about 0.9 to 0.1, preferably 0.6 to 0.5 bar (abs.) is applied on the evacuation side of the pipe.

The injection pumps used for generating the required pressure can be double-acting piston pumps or screw pumps.

For monitoring the progress of the filling of the profile, small openings can be drilled in the profile. These holes are plugged before filling and, during pumping of the material, the holes are temporarily opened to allow for visual inspection of the location of the front of the flowing medium. The dimension of the inspection holes is so small that the pressure difference inside the hollow profile is not essentially reduced.

The pipe is preferably weighted such that it exhibits a weighting percentage of 1 to 25 %, preferably about 5 to 20 %, in particular about 7.5 to 15 %, calculated in relation to the buoyancy of an air-filled pipe. A particularly advantageous weighting is about 10 %. A pipe with a weighting of such kind can be readily controlled during submerging and simultaneously provides a suitable anchoring on the bottom of the water. At terrestrial installations, reliable immobilisation of the pipe is achieved.

The pipeline can comprise a plurality of pipes which are weighted in the manner discussed above. It is also possible to join together (by welding and/or by using flange coupling) weighted and unweighted pipe, which however requires that the weighting is sufficiently large to allow for reliable submerging of the whole pipeline.

The pipe can be used in a manner known *per se,* for example, for marine installations. The pipe is weighted preferably on land by forming apertures in both ends of the hollow pipe wall and by injecting concrete mix in the cavity of the wall. When air is displaced from the pipe, its potential buoyancy is reduced in aquatic systems. According to the present invention, the wall cavity is filled with concrete mass which takes up at least 50 %, in particular at least 95 % of the volume of the wall cavity.

During sinking of pipelines at sea on in lakes a typical way of setting about is to plug both ends of a longish part of the pipeline, e.g. formed by two or more pipes which have been welded together, at least one of which is weighted as explained above, and to tow the pipe to the submersion site. The plugs of the pipe ends are provided with valves to allow for introduction of water. The pipe is controllably filled by opening the valves at the ends of the pipes and by allowing water to flow into the pipe. When buoyancy is no more sufficient to keep the pipe floating it will sink to the bottom.

When desired the pipe can still additionally be covered with covering masses to secure the installation against, e.g., any forces of the waves exerted upon the pipeline.

The weighting is preferably carried out with a plastic, flowing mass which can be pumped and which has a density of about 1,100 to 2,500 kg/m³ and which hardens and stiffens after a longish time, amounting usually to at least 10 hours, preferably at least 24 hours, advantageously at least 48 hours and about 16 weeks at the most, preferably about 12 weeks maximum, usually 4 weeks maximum. Advantageously, the mass looses it fluidity and capability of being pumped at the earliest after about 4 hours, preferably at the earliest after about 10, in particular at the earliest after about 24 hours.

A mass of the present kind usually comprises an aggregate which is formed by particulate or granular material in mixture with a fluid. Usually, components which are capable of keeping together the aggregate (binders) are included as are components which regulate the consistency of the mass. The mass is preferably "injectable" which term refers to the fact that the mass should be capable of being sprayed inside the wall of the pipe from a nozzle.

The final strength of the hardened weighting or injection mass is preferably smaller than that of the pipe.

According to a preferred embodiment, the weighting or injection mass comprises a concrete mix, i.e. a mixture of aggregate and a hydraulic binder.

Generally speaking, a suitable concrete mix comprises the following components:
- a hydraulic binder, such as cement or iron furnace slag,
- aggregate with a suitable particle size,
- additives and auxiliary components which are capable of modifying the consistency, viscosity and similar properties of the mix and
- water for mixing of the mass.

When slag is being used as a binder, an alkaline agent, such as a hydroxide, a carbonate or a bicarbonate of an alkali metal or earth alkaline metal or an alkaline silicate (e.g. water glass) is incorporated into the mixture.

In the mix, the concentration of the binder is about 10 to 60 %, preferably about 15 to 40 %, of the total weight of the binder and the aggregate

The cement can be of a conventional quality, such as Portland cement or rapid cement. The slag can be formed by, in particular, ground and granulated slag. For the hydraulic binder, it is generally required that it has a specific surface (Blaine) of between about 100 and 1,000 m²/kg, in particular about 200 to 800 m²/kg.

The aggregate is preferably a mineral, based on aluminium silicate. Advantageously it consists of gravel having a coarseness of 0 to 16 mm, of finely divided gravel with a coarseness of 0 to 8 mm or, for example, with two different coarsenesses of 0 to 2 mm and 0.5 to 8 mm, generally of finely divided gravel with an (average) particle size smaller than 2.5 mm, in particular less than 2.2 mm, or of sand with a corresponding (average) particle size. Instead of the gravel, the finely divided gravel or the sand, or preferably in mixture therewith, it is possible to incorporate into the mix also traditional fillers, such as natural fillers (d <ø 0.25 mm), fly ash (PFA) or some other, synthetic filler. Fly ash imparts to the mix improved fluidity which can be attributed to the spherical form of the fly ash particles.

Other fillers, which can be used instead of or in addition to the mineral aggregate, are formed by heavy particles of metal oxides or metal salts, such as barium sulphate, magnetite or similar.

As pointed out, the aggregate can consist of particles of different coarseness. Usually the finest divided class (d <ø 2.5 mm) forms the majority of the aggregate; the ratio between the more finely divided and the coarser class can, thus, be about 100:1 to 1.1:1.

Beside the afore-mentioned components, the concrete mix can according to the present invention also contain components which give the desired consistency and which control viscosity of the material (additives and auxiliary agents) having as main task e.g. a regulation of the properties of the mix.

In the mix, modifying agents of the cellulose derivative type and stearate type can further be used. With cellulosic derivatives, such as cellulose ethers and esters, viscosity can be controlled. The derivatives give additional toughness and inner cohesion. Of the cellulosic derivatives, in particular the following can be mentioned: hydroxyethyl and hydroxylpropyl cellulose, carboxy methylcellulose and ethylcellylose and methylcellulose and hydroxyalkylated derivatives thereof (e.g. hydroxypropyl methylcellulose, hydroxyethyl methylcellulose and hydroxybutyl methylcellulose).

Stearic acid salts, e.g. alkali metal or earth alkaline metal salts, can also be used as additives. Calcium stearate is an example of a suitable viscosity regulating substance.

Of the above modifying agents one or several can be used, the total added amount being about 0.01 to 10 %, preferably 0.1 to 5 %, of the dry weight of the binder and aggregate.

Additives are exemplified by plasticizing agents, such as lignosulphonate or other sulphonated polyelectrolytes and condensation products of formaldhyde and melanine, formaldehyde and naphthalene. The purpose of adding plasticizing agents is to reduce the water-to-binder ratio. The use of a plasticizing agent is particularly important for avoiding premature hardening of the mix. The amount of the plasticizing agent is about 0.1 to 5.0 weight % of the binder.

Important components further used are the retarding agents with which the hardening of the mix can be delayed. Typical retarding agents are phosphate-based, e.g. of the sodium pyrophosphate type. The concentration is suitably about 0.1 to 7.5 % of the weight of the binder. An example of a suitable retarding agent is Lentan 77 which is supplied by Basf Admixtures Deutschland, Germany.

Another preferred, although optional, component is a foaming agent, e.g. a foaming agent based on polystyrene. The amount can be 0.01 to 10 % of the weight of the binder. The foaming agent can be added to the mix in the form of a foam which is formed by foaming of an aqueous mixture containing the foaming agent in a concentration of about 0.1 to 20 % of the weight of the mixture.

In the concrete mix used according to the invention, the ratio w/c, i.e. water (w) to binder (c), amounts to about 0.1 to 0.7, in particular the ratio w/c = 0.20 - 0.5.

As a specific example of a suitable concrete mix, a weighting mass having the following composition can be mentioned:
- 80 kg sand with a particle size of about 2 mm and a density of 1,350 kg/m³
- 40 kg cement (standard Portland cement),
- 16 litre water (tap water and not salt water),
- 8 litre foam (formed e.g. with a foaming agent, Neopor, in a 2 % water mixture, foamed with compressed air) and 2.5 litre of a retardator additive (e.g. Lentan 77)

The consistency of the mass is usually plastic to totally fluid and it has good cohesion. The composition of the mass can be further modified to suit pumping and injection.

A mix which can be injected at a pressure of at least about 0.1 MPa through nozzles with small apertures (diameter of about 10 to 50 mm) contains for example 2 to 10 parts by weight of an aggregate having a particle size of 0 to 2.5 mm, 1 to 3 parts by weight of a binder, the aggregate-to-binder ratio being about 1.5 to 3. For slag binder an activator of the above kind (such as sodium hydroxide or carbonate) can be further incorporated into the mix in an amount of 0.01 to 1 part by weight. In addition, the mix usually contains 0.01 to 1 parts by weight of additives and auxiliary components and 0.5 to 1.0 parts of mixing water.

A concrete mix suitable for the present invention has a density of about 1,200 to 2,000 kg/m³, preferably about 1,700 to 1,900 kg/dm³.

As noted above, the mass has to have a long hardening time, preferably the mass should be plastic during at least 24 hours, in particular at least 48 hours, and the final strength properties of mass, e.g. compression strength, should be inferior to those of the thermoplastic pipe

A suitable level for the final compression strength of the weighting/injection mass, in particular a concrete mass, (hardening time longer than 7 days) is <5 kN/m², preferably about ca 0.1 to 4 kN/m², in particular about 0.5 to 2 kN/ m², for example at maximum about 1 kN/mm².

## Claims

1. Method of weighting a plastic pipe with a hollow, air-filled wall, wherein the hollow wall is filled with a flowing medium which displaces the air, said flowing medium used comprising a mass which can be pumped and which has a density of 1,100 - 2,500 kg/m³, and the weighting mass is pumped into the hollow wall of the pipe under pressure while simultaneously evacuating air from the wall, **characterized in that** the air inside the hollow wall of the pipe is evacuated by creating a reduced pressure at the other end of the pipe to create an increased pressure difference within the hollow wall of the pipe.

2. The method according to claim 1, wherein the weighting mass used comprises an aggregate along with a binder for the aggregate, for example a concrete mix.

3. The method according to claim 1 or 2, wherein the weighting mass, in particular a concrete mix, has a hardening time of more than 24 hours, preferably more than 48 hours.

4. The method according to any of claims 1 to 3, wherein the weighting mass has a density of about 1,200 to 2,000 kg/m³, preferably about 1,700 to 1,900 kg/m³.

5. The method according to any of claims 1 to 4, wherein the pipe is weighted to achieve a weighting percentage of 1 to 25 %, preferably about 5 to 20 %, in particular about 7.5 to 15 %, calculated from the buoyancy in water of the corresponding air-filled pipe.

6. The method according to any of claims 1 to 5, comprising weighting a double-walled pipe.

7. The method according to claim 6, wherein the double-walled pipe is a lightweight wall formed by spirally wound thermoplastic profiles having a rectangular, quadratic, elliptic or cylindrical cross-section, adjacent profile windings being welded together to form the hollow wall of the pipe.

8. The method according to any of claims 1 to 7, wherein the final strength properties of mass is inferior to those of the thermoplastic pipe

## Patentansprüche

1. Verfahren zum Beschweren eines Kunststoffrohrs mit einer hohlen luftgefüllten Wand, wobei die hohle Wand mit einem Strömungsmedium gefüllt ist, das die Luft verdrängt, wobei das verwendete Strömungsmedium eine Masse aufweist, die gepumpt werden kann und eine Dichte von 1100 - 2500 kg/m³ hat, und wobei die Beschwerungsmasse unter Druck in die hohle Wand des Rohrs gepumpt wird, während gleichzeitig Luft aus der Wand evakuiert wird, **dadurch gekennzeichnet, dass**
die Luft im Inneren der hohlen Wand des Rohrs evakuiert wird, indem an dem anderen Ende des Rohrs ein verringerter Druck erzeugt wird, um eine erhöhte Druckdifferenz innerhalb der hohlen Wand des Rohrs zu erzeugen.

2. Verfahren nach Anspruch 1, wobei die verwendete Beschwerungsmasse ein Aggregat zusammen mit einem Binder für das Aggregat, zum Beispiel eine Betonmischung, aufweist.

3. Verfahren nach Anspruch 1 oder 2, wobei die Beschwerungsmasse, insbesondere eine Betonmischung, eine Härtungszeit von mehr als 24 Stunden, vorzugsweise mehr als 48 Stunden, hat.

4. Verfahren nach einem der Ansprüche 1 bis 3, wobei die Beschwerungsmasse eine Dichte von etwa 1200 bis 2000 kg/m³, vorzugsweise etwa 1700 bis 1900 kg/m³, hat.

5. Verfahren nach einem der Ansprüche 1 bis 4, wobei das Rohr beschwert wird, um aus dem Auftrieb in Wasser, der dem luftgefüllten Rohr entspricht, berechnet einen Gewichtsanteil von 1 bis 25%, vorzugsweise etwa 5 bis 20%, insbesondere etwa 7,5 bis 15% zu erreichen.

6. Verfahren nach einem der Ansprüche 1 bis 5, welches das Beschweren eines doppelwandigen Rohrs aufweist.

7. Verfahren nach Anspruch 6, wobei das doppelwandige Rohr eine Leichtgewichtwand ist, die durch spiralförmig gewickelte thermoplastische Profile mit einem rechteckigen, quadratischen, elliptischen oder zylindrischen Querschnitt ausgebildet wird, wobei benachbarte Profilwicklungen zusammengeschweißt sind, um die hohle Wand es Rohrs zu bilden.

8. Verfahren nach einem der Ansprüche 1 bis 7, wobei die endgültigen Festigkeitseigenschaften der Masse denen des thermoplastischen Rohrs unterlegen sind.

## Revendications

1. Procédé pour alourdir un tuyau en plastique avec une paroi creuse remplie d'air, dans lequel la paroi creuse est remplie avec un milieu fluide qui déplace l'air, ledit milieu fluide utilisé comprenant une masse qui peut être pompée et qui a une densité de 1100-2500 kg/m³, et la masse d'alourdissement est pompée dans la paroi creuse du tuyau sous pression tout en évacuant simultanément l'air de la paroi, **caractérisé en ce que**
l'air à l'intérieur de la paroi creuse du tuyau est évacué en créant une pression réduite au niveau de l'autre extrémité du tuyau afin de créer une différence de pression accrue à l'intérieur de la paroi creuse du tuyau.

2. Procédé selon la revendication 1, dans lequel la masse d'alourdissement utilisée comprend un agrégat conjointement avec un liant pour l'agrégat, par exemple un mélange de béton.

3. Procédé selon la revendication 1 ou 2, dans lequel la masse d'alourdissement, en particulier un mélange de béton, a un temps de durcissement supérieur à 24 heures, de préférence supérieur à 48 heures.

4. Procédé selon l'une quelconque des revendications 1 à 3, dans lequel la masse d'alourdissement a une densité d'environ 1200 à 2000 kg/m³, de préférence d'environ 1700 à 1900 kg/m³.

5. Procédé selon l'une quelconque des revendications 1 à 4, dans lequel le tuyau est alourdi pour obtenir un pourcentage d'alourdissement de 1 à 25 %, de préférence d'environ 5 à 20 %, en particulier d'environ 7,5 à 15 %, calculé à partir de la flottabilité dans l'eau du tuyau rempli d'air correspondant.

6. Procédé selon l'une quelconque des revendications 1 à 5, comprenant l'étape consistant à alourdir un tuyau à double paroi.

7. Procédé selon la revendication 6, dans lequel le tuyau à double paroi est une paroi légère formée en enroulant en spirale des profilés thermoplastiques ayant une section transversale rectangulaire, quadratique, elliptique ou cylindrique, les enroulements de profilé adjacents étant soudés ensemble afin de former la paroi creuse du tuyau.

8. Procédé selon l'une quelconque des revendications 1 à 7, dans lequel les propriétés de résistance finales de masse sont inférieures à celles du tuyau thermoplastique.
